# EUROPÄISCHE PATENTSCHRIFT

(11) **EP 2 054 561 B1**
(45) Veröffentlichungstag und Bekanntmachung des Hinweises auf die Patenterteilung: **01.06.2011**
(21) Anmeldenummer: 07801516.1
(22) Anmeldetag: 06.08.2007
(51) Int. Cl.: E04B 1/80

(54) **VAKUUMISOLATIONSPANEEL MIT DURCHFÜHRUNG**
VACUUM INSULATION PANEL WITH A LEAD-THROUGH
PANNEAU ISOLANT SOUS VIDE AVEC TRAVERSÉE

(30) Priorität: 24.08.2006 DE 102006039621
(43) Veröffentlichungstag der Anmeldung: 06.05.2009
(73) Patentinhaber: Porextherm-Dämmstoffe GmbH, 87437 Kempten (DE)
(72) Erfinder: HENN, Dieter, 87448 Waltenhofen (DE)
(74) Vertreter: Fiener, Josef
(86) Internationale Anmeldenummer: PCT/EP2007/006914
(87) Internationale Veröffentlichungsnummer: WO 2008/022706

(56) Entgegenhaltungen:
- JP-A- 8 312 880
- US-A1- 2005 053 755

## Beschreibung

Die Erfindung betrifft ein Vakuumisolationspaneel mit den oberbegrifflichen Merkmalen des Anspruches 1 und ein entsprechendes Verfahren zur Herstellung, wie aus der JP-A-08312880 bekannt.

Wegen ihrer hohen Wärmedämmfähigkeit werden Vakuumisolationspaneele (VIP), meist auf Basis von feindispersem Siliziumdioxid bzw. hochdisperser Kieselsäure, in verschiedenen Anwendungen eingesetzt, z.B. zur Energieeinsparung als Wärmedämmplatten im Baubereich. Der Dämmstoffstützkörper kann auch aus gefällter Kieselsäure, Aerogel, offenzelligem PU- oder PS-Schaum, Polyisocyanatschaum und Fasermaterialien oder Kombinationen hieraus bestehen. Die geringe Wärmeleitung wird dabei durch ein hohes Vakuum erreicht, das innerhalb einer Folienumhüllung aufgebaut wird. Durch den Einsatz von derartigen Vakuumisolationspaneelen kann beispielsweise auch die Wandstärke der Dämmschicht bei Gewerbe- und Haushaltskühlschränken reduziert oder längere Transportzeiten bei temperaturgeregelten Transportsystemen erzielt werden, ebenso eine Verringerung der Abmessungen und des Gewichts isolierter Frachtbehälter.

Das Vakuumisolationspaneel besteht in der Regel aus einem von einer vakuumdichten Schutzfolie umhüllten Dämmstoffkern. Nach Einbringen in die Folienumhüllung wird das System in der Regel auf ein Vakuum von 1,5 mbar und darunter evakuiert und versiegelt. Das Kernmaterial dient dabei der Bewegungshemmung noch vorhandener Gasmoleküle und bildet eine Sperrschicht gegen Wärmeübertragung durch Strahlung, wozu gegebenenfalls zusätzliche Trübungsmittel, um die Infrarotstrahlung zu zerstreuen oder zu absorbieren, vorgesehen sind. Da der Evakuierungsgrad in der Umhüllung die Wärmeleitfähigkeit bzw. Dämmwirkung von Vakuumisolationspaneelen direkt beeinflusst, ist die Dichtheit der Siegelnähte der den Dämmstoffkern umhüllenden Folien besonders zu beachten. Derartige Siegel- oder Schweißnähte sind auch an den Rändern von Ausnehmungen erforderlich, die in den Vakuumisolationspaneelen beispielsweise als Durchführungen für Leitungen, Rohre oder Befestigungsmittel vorgesehen sind.

Die Herstellung von Durchführungen in Vakuumisolationspaneelen zeigt beispielsweise die WO 2004/001149. Hierin wird vorgeschlagen, die Durchführung über Durchdringungskörper zu realisieren, die mit der Hülle des Vakuumisolationspaneels von außen her nachträglich gasdicht verschweißt werden. Die Durchdringungskörper bestehen dabei aus einem Paar von Teilkörpern mit Schäften, über die sich die Teilkörper gegenseitig konzentrisch durchdringen und miteinander gasdicht verbunden werden sollen.

Aus der US 2005/0053755 ist des Weiteren ein Verfahren bekannt, bei dem die Ober- und Unterfolie der Folienumhüllung des Vakuumisolationspaneels in Bereich der Durchführungen direkt miteinander verschweißt werden. Zum Schutz dieser Nähte wird dann in die Durchführung ein Schutzrohr eingesetzt. Bei kleineren Durchmessern ist jedoch die Siegelnahtbreite sehr schmal, so dass sich daraus Abdichtungsprobleme ergeben können.

Nachteil der erstgenannten Herstellungsmethode ist es, dass durch den Einsatz massiver Durchführungen und der anschließenden Bearbeitung ein relativ hoher Isolationsverlust durch die Festkörperleitung der Teilkörper entsteht und zudem ein zeit- und kostenintensives, nachträgliches Verschweißen erforderlich ist. Ähnliches gilt für die JP-A-08312880, da dort zwei teilige Buchsen vorgeschlagen werden.

Aufgabe der vorliegenden Erfindung ist es daher, ein Vakuumisolationspaneel mit einer dünnwandigen Durchführung zu schaffen, das möglichst geringe Isolationsverluste aufweist, sowie kostengünstig und einfach herzustellen ist.

Diese Aufgabe wird durch ein Vakuumisolationspaneel gemäß Anspruch 1 sowie ein Verfahren zur Herstellung eines Vakuumisolationspaneels gemäß Anspruch 5 gelöst.

Die vorliegende Erfindung stellt ein Vakuumisolationspaneel bereit, das einen Kern bzw. Dämmstoffstützkörper aufweist, in dessen Hauptfläche wenigstens eine Durchführung vorgesehen ist. Die Ausnehmung für die Durchführung kann mittels mechanischer Bearbeitungsverfahren wie beispielsweise Bohren, Fräsen oder durch Wasserstrahl- oder Laserschneiden in den Dämmstoffstützkörper eingebracht werden. Der Dämmkern bzw. Dämmstoffstützkörper besteht aus anorganischen Materialien, wie beispielsweise pyrogen erzeugter, hochdisperser Kieselsäure oder Faserstoffen oder aus Schaummaterialien, wie beispielsweise Polystyrol oder Polyurethan, und weist eine vakuumdichte Folienumhüllung auf. Das erfindungsgemäße Vakuumisolationspaneel ist dadurch gekennzeichnet, dass die Durchführung als dünnwandige Buchse mit einer dem Dämmstoffstützkörper zugewandten Außenseite ausgebildet ist. Ein erstes Buchsenende weist dabei einen ersten, sich radial von der Buchse aus in die Hauptfläche erstreckenden, vorgeformten Bund auf, demgegenüber ein zweiter Bund vorgesehen ist, der nach Durchstecken der Buchse durch thermische Verformung des zweiten Buchsenendes der Buchse gebildet wird, wobei die vakuumdichte Folienumhüllung dann mit beiden Bünden verschweißt ist. Diese Bünde oder Kragen bilden somit eine stabile Auflagefläche für Befestigungselemente wie beispielsweise Schrauben o.ä., so dass beim Befestigen der Vakuumisolationspaneele, beispielsweise an einer Wand, keine Verformung des Dämmstoffstützkörpers verursacht wird.

Zudem bilden diese Bundflächen oder Kragen eine stabile Umklammerung des Dämmkerns und breite Ringflächen für die Verschweißung mit der Folienumhüllung, wodurch eine sichere Abdichtung erzielt wird. Um Isolationsverluste durch die Buchse möglichst gering zu halten, weist diese vorteilhafterweise auf ihrer dem Dämmstoffstützkörper zugewandten Außenseite eine diffusionsdichte Beschichtung auf. Um Diffusionsverluste noch weiter zu verringern, kann auch die Innenseite der Buchse, also die Wandung der Durchführung entsprechend diffusionsdicht beschichtet sein. Eine derartige Beschichtung empfiehlt sich besonders bei Durchführungen mit großem Durchmesser, da hierbei aufgrund der vergrößerten Randfläche der Durchführung eine erhöhte Diffusion stattfinden kann.

Als empfehlenswert wird angesehen, wenn die Beschichtung aus metallischen und/oder anorganischen Schichten gebildet ist, die auf die dem Dämmstoffstützkörper zugewandten Außenseite und/oder der gegenüberliegenden Innenseite der Buchse aufgedampft sind. Metallische Schichten können beispielsweise aus Aluminium gebildet werden, wohingegen anorganische Schichten beispielsweise aus auf die entsprechende(n) Seite(n) der Buchse aufgedampftem SiOₓ bestehen. Die Schaffung der Schichten kann über geeigneten Depositionsverfahren durchgeführt werden.

Bevorzugt besteht die Buchse aus einem thermoplastischen Kunststoff, da hierdurch eine innige Verbindung mit der materialähnlichen Folie der Umhüllung erzielt werden kann. Hierfür geeignet sind alle thermoplastischen Kunststoffe wie beispielsweise PE, PP, Copolymere oder Polyester. Die Buchse mit dem auf einer Seite vorgeformten Bund kann preisgünstig in Art eines Dübels beispielsweise im Spritzgussverfahren hergestellt werden.

Das Verfahren zur Herstellung eines derartigen Vakuumisolationspaneels mit einem Dämmstoffstützkörper (Kern), der in seiner Hauptfläche (Flachseite) eine Durchführung aufweist, umfasst die folgenden Schritte:

Zunächst wird eine Ausnehmung in einem Dämmstoffstützkörper eingebracht. Dies kann durch mechanische Bearbeitungsverfahren wie z.B. Bohren, Fräsen etc. erfolgen. In die Ausnehmung wird eine passgenaue Buchse eingeführt, die einer Seite (dem ersten Buchsenende) einen vorgeformten Bund aufweist. Die Buchse folgt in ihrer Geometrie den Vorgaben durch die Ausnehmung und ist somit nicht auf eine bestimmte Form festgelegt. Zur Ausformung des zweiten Bundes der Buchse erfolgt nun (nach dem Durchstecken durch den Kern) die thermische Verformung des zweiten, aus dem Dämmstoffstützkörper herausragenden Buchsenendes. Dies kann über entsprechend ausgebildete, heizbare Druck- oder Pressstempel erfolgen, die in das Buchsenende eingeführt werden. Der Dämmstoffstützkörper wird dann, ggf. nach Abkühlen der verformten Buchse, mit einer vakuumdichten Folie umhüllt. Nach der Umhüllung wird das System evakuiert und schließlich die Folie mit beiden Bundflächen (Kragen) großflächig sowie in den Randbereichen des Vakuumisolationspaneels vakuumdicht verschweißt.

Zum erleichterten Auffinden der Durchführung, z.B. auf einer Baustelle und um Beschädigungen der Folie bzw. des Vakuumisolationspaneels durch unsachgemäße Öffnung der Durchführung zu vermeiden, wird die vakuumdichte Folie bevorzugt innerhalb der Buchse entfernt. Dabei kann die Folie insbesondere programmgesteuert ausgeschnitten oder ausgestanzt werden. Der Begriff "Durchführung" ist hierbei nicht auf zylindrische Durchbrüche beschränkt, sondern kann jede geometrische Form einer Aussparung aufweisen, wie Mehrecke, Ellipsen, Ovale und gleichartige Grundformen.

Weitere Vorteile, Merkmale und Besonderheiten der Erfindung ergeben sich aus der nachfolgenden Beschreibung bevorzugter, jedoch nicht beschränkender Ausführungsformen der Erfindung anhand der schematischen und nicht maßstabsgetreuen Zeichnungen. Es zeigen:
Fig. 1 eine Schnittdarstellung einer bevorzugten Ausführungsform eines Vakuumisolationspaneels bei der Herstellung, und
Fig. 2 eine bevorzugte Ausführungsform eines fertiggestellten Vakuumisolationspaneels in perspektivischer Darstellung.

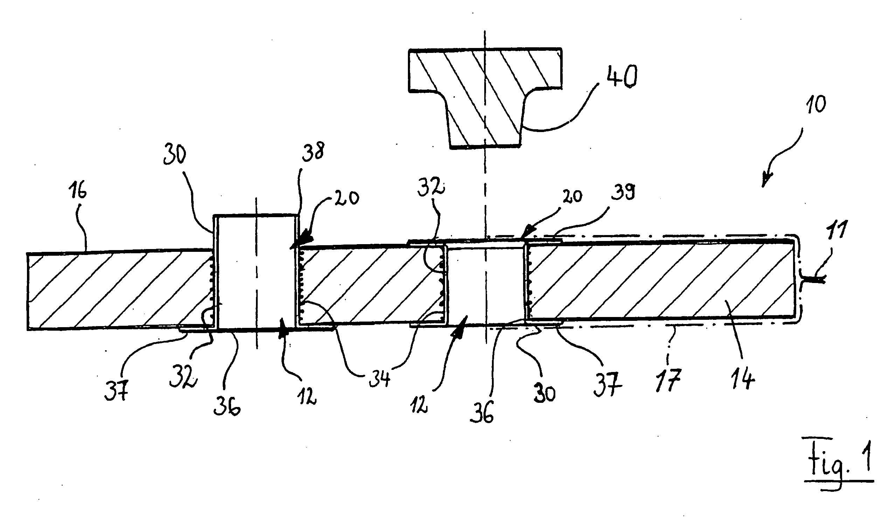

Die Schnittdarstellung der Fig. 1 zeigt ein erfindungsgemäßes Vakuumisolationspaneel 10 mit zwei parallel angeordneten Ausnehmungen 12 für die Durchführungen 20, die durch Buchsen 30 umgrenzt werden. Die Buchsen 30 bestehen im Ausführungsbeispiel der Fig. 1 aus einem thermoplastischen Kunststoff und weisen an ihren dem Dämmstoffstützkörper 14 zugewandten Außenseiten 32 (hier zylindrisch) eine diffusionsdichte Beschichtung 34 aus Aluminium auf, die hier durch Punkte an der Umfangsfläche angedeutet ist. Während sich eine der Buchsen 30 (in Fig. 1 links) noch im vorgeformten Ausgangszustand befindet, der ein Durchstecken durch den Kern erlaubt, ist die zweite Buchse 30 (in Fig. 1 rechts) bereits im thermisch verformten Zustand dargestellt. Ebenfalls gezeigt wird ein Pressstempel 40, der die Negativform der letztendlichen Ausformung der Buchse 30 aufweist. Die Buchse 30 verfügt an ihrem ersten (hier unteren) Buchsenende 36 über einen vorgeformten Bund 37, der nach Einführen der Buchse 30 in die Ausnehmung 12 des Dämmstoffstützkörpers 14 an diesem anliegt. Das zweite Buchsenende 38 überragt nach dem Einführen in die Ausnehmung 12 den Dämmstoffstützkörper 14. Zur thermischen Verformung wird der beheizbare Pressstempel 40 in die Buchse 30 eingepresst und verformt dabei das zweite Buchsenende 38 zu einem zweiten Bund 39. Der Bund 39 erstreckt sich nach Abschluss der Verformung ebenso wie der vorgeformte Bund 37 radial von der Buchse 30 aus zur Flachseite bzw. Hauptfläche 16 des Dämmstoffstützkörpers 14 hin und liegt nahezu bündig an dieser an.

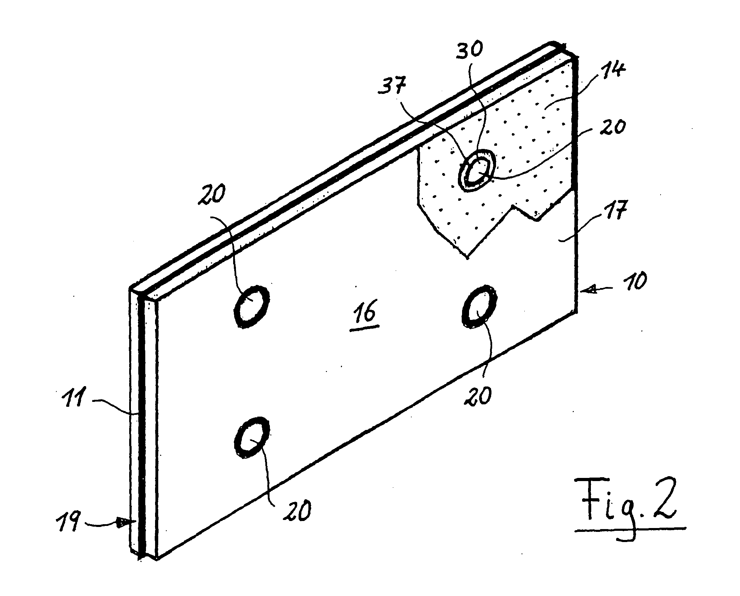

Zur Fertigstellung eines Vakuumisolationspaneels 10 wird schließlich der gesamte Dämmstoffstützkörper 14 inklusive der Buchsen 30 mit einer vakuumdichten Folienumhüllung 17 versehen, der gesamte Aufbau evakuiert und durch Verschweißen in den Randbereichen 19 unter Bildung einer umlaufenden Siegelnaht 11 verschlossen (vgl. Fig. 2). Zudem wird die vakuumdichte Folienumhüllung 17 jeweils mit dem ersten und dem zweiten Bund 37, 39 der Buchse 30 verschweißt, bevorzugt in einem Arbeitsschritt, wobei sich durch die Kragenform eine relativ breite Ringsiegelfläche ergibt..

Fig. 2 zeigt das Vakuumisolationspaneel 10 in perspektivischer Ansicht. Dieses besteht aus dem Dämmstoffstützkörper 14 mit vakuumdichter Folienumhüllung 17 und weist vier Durchführungen 20 auf. Von dem hier rechts oberen Teil des Vakuumisolationspaneels 10 wurde die vakuumdichte Folienumhüllung 17 weg gelassen, so dass hier der aus einem mikroporösen Material bestehende Dämmstoffstützkörper 14 sowie der Bund 37 der Buchse 30 zu erkennen sind, die eine der Durchführungen 20 bildet. Das Vakuumisolationspaneel wird nach Anbringen der vakuumdichten Folienumhüllung 17 evakuiert und die vakuumdichte Folienumhüllung 17 anschließend verschweißt. Dadurch wird die (umlaufende) Siegelnaht 11 im Randbereich 19 des Vakuumisolationspaneels 10 erzeugt, wobei auch Folienbeutel eingesetzt werden können, und zusätzlich jeweils eine Schweißverbindung zwischen der Folienumhüllung und den Kragenflächen bzw. Bünden 37, 39 der Buchsen 30 hergestellt.

Im Ausführungsbeispiel der Fig. 2 sind die Durchführungen 20 von der vakuumdichten Folienumhüllung 17 bedeckt, die beim Einbau auf der Baustelle, z.B. bei der Fassadendämmung bzw. sonstigem Bedarf durchstoßen, aufgeschnitten oder ausgestanzt werden können. Das Vakuumisolationspaneel bleibt davon unberührt, d.h. das Vakuum wird nicht zerstört, da die vakuumdichte Folienumhüllung 17 gasdicht mit den Bünden 37, 39 verschweißt ist. Über die Durchführungen 20 kann das Vakuumisolationspaneel 10 mittels Schrauben, Nieten o.ä. Verbindungsmitteln an einer zu isolierenden Fläche (nicht dargestellt) befestigt werden, wobei allerdings auch Leitungen, Kabel o.ä. durch diese Durchführungen 20 von der Hauptfläche 16 weg durch das Vakuumisolationspaneel 10 hindurchgeführt werden. Die durchgeführten Objekte können ebenso wie etwaig nicht verwendete Durchführungen 20 nachträglich mit Dämmschäumen o.ä. ausgefüllt bzw. eingebettet werden, um Diffusionsverluste an den Durchführungen 20 noch weiter zu verringern.

### Bezugszeichenliste:

- 10 =: Vakuumisolationspaneel
- 11 =: Siegelnaht
- 12 =: Ausnehmungen
- 14 =: Dämmstoffstützkörper
- 16 =: Hauptfläche
- 17 =: Folienumhüllung
- 19 =: Randbereich
- 20 =: Durchführung
- 30 =: Buchse
- 32 =: Außenseite
- 34 =: Beschichtung
- 36 =: erstes Buchsenende
- 37 =: erster Bund
- 38 =: zweites Buchsenende
- 39 =: zweiter Bund
- 40 =: Pressstempel

## Patentansprüche

1. Vakuumisolationspaneel (10) mit wenigstens einer Durchführung (20) in einer Hauptfläche (16) eines Dämmstoffstützkörpers (14) und einer vakuumdichten Folienumhüllung (17), wobei die Durchführung als Buchse (30) mit einer dem Dämmstoffstützkörper (14) zugewandten Außenseite (34) ausgebildet ist und am ersten Buchsenende (36) ein erster, sich radial von der Buchse (30) ausgehend in die Hauptfläche (16) erstreckender, vorgeformter Bund (37) vorgesehen ist, **dadurch gekennzeichnet, dass** dem ersten Bund (37) gegenüberliegend ein durch thermische Verformung eines zweiten Buchsenendes (38) der Buchse (30) gebildeter zweiter Bund (39) vorgesehen ist und wobei die vakuumdichte Folienumhüllung (17) mit den Bünden (37, 39) verschweißt ist.

2. Vakuumisolationspaneel nach Anspruch 1, **dadurch gekennzeichnet, dass** die Buchse (30) an ihrer Außenseite (32) und/oder die Innenseite eine diffusionsdichte Beschichtung (34) aufweist.

3. Vakuumisolationspaneel nach Anspruch 2, **dadurch gekennzeichnet, dass** die Beschichtung (34) aus metallischen und/oder anorganischen auf die Innen- und/oder Außenseite (32) aufgedampften Schichten gebildet ist.

4. Vakuumisolationspaneel nach einem der vorhergehenden Ansprüche, **dadurch gekennzeichnet, dass** die Buchse (30) aus einem thermoplastischen Kunststoff besteht.

5. Verfahren zur Herstellung eines Vakuumisolationspaneels (10) mit einem in seiner Hauptfläche (16) eine Durchführung (20) aufweisenden Dämmstoffstützkörper (14) umfassend die Schritte:
- Einbringen einer Ausnehmung (12) in einem Dämmstoffstützkörper (14),
- Einführen einer passgenauen Buchse (30) mit einem an einem ersten Buchsenende (36) angeordneten ersten Bund (37) in die Ausnehmung (12),
- Umhüllen des Dämmstoffstützkörpers (14) mit einer vakuumdichten Folie,
- Evakuieren der vakuumdichten Folie,
- Verschweißen der vakuumdichten Folie mit dem ersten und einem zweiten Bund (37, 39) der Buchse (30) sowie im Randbereich (19) des Vakuumisolationspaneels (10),
**dadurch gekennzeichnet, dass** eine Ausformung des zweiten Bundes (39) durch thermische Verformung eines zweiten Buchsenendes (38) erfolgt.

6. Verfahren nach Anspruch 5, **dadurch gekennzeichnet, dass**
die vakuumdichte Folie innerhalb der Buchse (30) entfernt, insbesondere programmgesteuert ausgeschnitten oder ausgestanzt wird.

## Claims

1. Vacuum isolation panel (10) with at least one lead-through (20) in a main surface (16) of an insulating material supporting body (14) and a vacuum-tight foil envelope (17), wherein the lead-through (20) is formed as a bush (30) with an outer side (32) facing the insulating material supporting body (14) and that on the first bush end (36) a first, preformed collar (37) is provided, extending radially away from the bush (30) into the main surface (16), **characterised in that**
a second collar (39) of the bush (30) is provided opposite said collar (37), being formed by thermal deformation of the second bush end (38), wherein the vacuum-tight foil envelope (17) is welded to the collars (37, 39).

2. Vacuum isolation panel according to claim 1, **characterised in that** the bush (30) has a diffusion-tight coating (34) on its outside (32) and/or its inside.

3. Vacuum isolation panel according to claim 2, **characterised in that** the coating (34) is formed by a metallic and/or inorganic layer deposited on the inner and/or outer side (32).

4. Vacuum isolation panel according to one of the preceding claims, **characterised in that** the bush (30) is made of a thermoplastic resin.

5. Method for manufacturing a vacuum isolation panel (10) with an insulating material supporting body (14) having a lead-through (20) in its main face (16), comprising the steps:
- forming a recess (12) in an insulating material supporting body (14),
- inserting into the recess (12) a properly matching bush (30) with a first bush end (36) having a first collar (37),
- enveloping the insulating material supporting body (14) with a vacuum-tight foil,
- evacuating of the foil envelope (17),
- welding the vacuum-tight foil with the collars (37, 39) of the bush (30) and the edge region (19) of the vacuum isolation panel (10), **characterised in that** forming of the second collar (39) is made by thermal deformation of the second bush end (38).

6. Method according to claim 5, **characterised in that** the vacuum-tight foil within the bush (30) is removed, in particular by program-controlled cutting or punching.

## Revendications

1. Panneau isolant sous vide (10), avec au moins une traversée (20) dans une face principale (16) d'un corps de soutien (14) en matériau isolant et avec une feuille d'enveloppe (17) étanche au vide, sachant que la traversée est réalisée sous forme de douille (30) ayant un côté extérieur (32) tourné vers le corps de soutien (14) en matériau isolant, et qu'il est prévu à la première extrémité (36) de la douille un premier collet préformé (37), s'étendant radialement depuis la douille (30) dans la face principale (16), **caractérisé en ce qu'**un deuxième collet (39), formé par déformation thermique d'une deuxième extrémité (38) de la douille (30), est prévu en vis-à-vis du premier collet (37), et sachant que la feuille d'enveloppe (17) étanche au vide est soudée aux collets (37, 39).

2. Panneau isolant sous vide selon la revendication 1, **caractérisé en ce que** le collet (30) présente sur son côté extérieur (32) et/ou sur le côté intérieur un revêtement (34) étanche à la diffusion.

3. Panneau isolant sous vide selon la revendication 2, **caractérisé en ce que** le revêtement (34) est formé de couches métalliques et/ou inorganiques déposées en phase vapeur sur le côté intérieur et/ou sur le côté extérieur (32).

4. Panneau isolant sous vide selon l'une des revendications précédentes, **caractérisé en ce que** la douille (30) est constituée d'un matériau thermoplastique.

5. Procédé de fabrication d'un panneau insolant sous vide (10) doté d'un corps de soutien (14) en matériau isolant présentant une traversée (20) dans sa face principale (16), comprenant les étapes suivantes ;
- réalisation d'un évidement (12) dans un corps de soutien (14) en matériau isolant,
- introduction dans l'évidement (12) d'une douille (30) en ajustement précis, dotée d'un premier collet (37) disposé à une première extrémité (36) de la douille,
- enrobage du corps de soutien (14) en matériau isolant avec une feuille étanche au vide,
- mise au vide dans la feuille étanche au vide,
- soudage de la feuille étanche au vide avec le premier collet (37) et avec un deuxième collet (39) de la douille (30), ainsi que dans la région de bord (19) du panneau isolant sous vide (10),
**caractérisé en ce que** le deuxième collet (39) est formé par déformation thermique d'une deuxième extrémité (38) de la douille.

6. Procédé selon la revendication 5, **caractérisé en ce que** la feuille étanche au vide est retirée à l'intérieur de la douille (30), notamment par découpage ou perforation sous la commande d'un programme.
